# EUROPÄISCHE PATENTSCHRIFT

(11) **EP 0 819 225 B1**
(45) Veröffentlichungstag und Bekanntmachung des Hinweises auf die Patenterteilung: **23.06.1999**
(21) Anmeldenummer: 96909012.5
(22) Anmeldetag: 03.04.1996
(51) Int. Cl.: F16G 13/16, H02G 11/00

(54) **FÜHRUNGSRINNE FÜR ENERGIEFÜHRUNGSKETTEN**
DUCT FOR AN ENERGY-FEED CHAIN
CONDUIT POUR CHAINE D'AMENEE D'ENERGIE

(30) Priorität: 03.04.1995 DE 19512086; 03.04.1995 DE 19512105
(43) Veröffentlichungstag der Anmeldung: 21.01.1998
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Patentanwälte Lippert, Stachow, Schmidt & Partner
(86) Internationale Anmeldenummer: DE9600586
(87) Internationale Veröffentlichungsnummer: WO9631710

(56) Entgegenhaltungen:
- DE-A- 3 300 495
- DE-C- 4 140 910
- DE-U- 8 811 440

## Beschreibung

Die Erfindung betrifft eine Führungsrinne für Energieführungsketten mit langgestreckten, parallelen Seitenteilen, zwischen denen eine Energieführungskette in Längsrichtung ablegbar ist, wobei die Führungsrinne aus mehreren in Längsrichtung der Rinne stirnseitig zueinander angeordneten Seitenteilen zusammengesetzt ist.

Derartige Führungsrinnen werden zur Führung von Energieführungsketten, die der Aufnahme von flexiblen Versorgungsleitungen für Elektrizität, Gase, Flüssigkeiten oder dergleichen dienen und diese einem beweglichen Verbraucher zuführen, eingesetzt. Ihre Verwendung erfolgt insbesondere bei langen Verfahrwegen der Energieführungsketten, wie z. B. im Anlagenbau, in der Fördertechnik usw., ohne hierauf beschränkt zu sein.

Die zumindest in einer Richtung biegsamen Energieführungsketten werden während der Fahrbewegung des beweglichen Verbrauchers in den Führungsrinnen in einer Ab- oder Aufrollbewegung ausgebreitet oder entfernt. Dabei wird bei langen Verfahrwegen in der Aufrollbewegung der Energieführungskette der obenliegende Bereich derselben, Obertrum genannt, auf dem in der Führungsrinne untenliegenden Bereich der Energieführungskette, Untertrum genannt, gleitend bewegt. Werden die Anschlußstücke der Energieführungsketten in der Mitte des Verfahrweges an der Führungsrinne montiert, so gleitet auf der einen Hälfte des Verfahrweges der Energieführungskette das Obertrum auf dem Untertrum. Um eine einfache Verfahrung der Energieführungskette auch auf der anderen Hälfte des Verfahrweges sicherzustellen, werden die Führungsrinnen zumeist mit Gleitschienen versehen, die an den Seitenwänden der Führungsrinnen angeordnet sind, so daß das Obertrum auf den Gleitschienen bewegbar ist.

Bisher bekannte Führungsrinnen für Energieführungsketten sind zumeist mittels Befestigungselementen an einer Unterkonstruktion verrutschsicher angeordnet, wobei die Befestigung der parallel zueinander angeordneten Seitenteile an der Unterkonstruktion durch Winkelbleche erfolgt, die mittels jeweils einer Schraubverbindung an den stirnseitig aneinanderstoßenden Seitenteilen und mittels einer weiteren Schraubverbindung an der Unterkonstruktion befestigt sind. Als Unterkonstruktion werden dabei oftmals quer zur Längsrichtung der Führungsrinnen angeordnete C-Profile eingesetzt, wobei die Kontermutter zur Befestigung der Winkelbleche längsverschiebbar in den C-Profilen angeordnet ist, so daß die Seitenteile der Führungsrinnen stufenlos voneinander beabstandet werden können. Des weiteren gibt es auch Führungsrinnen, die als U-Profile ausgebildet sind.

Die bisher bekannten Führungsrinnen sind meist aus Stahlblechen mit einer Stärke von ca. 2 mm gefertigt, die zur Erhöhung der Steifigkeit profiliert sein können. Zur Befestigung der Gleitschienen sind die Seitenwände sowie die Gleitschienen mit Durchgangsbohrungen versehen, so daß die Gleitschienen an den Seitenwänden der Führungsrinnen mittels Schraubverbindungen befestigbar sind.

Nachteilig an derartigen Führungsrinnen ist ihr vergleichsweise hohes Gewicht, die nach außen vorstehenden, teilweise scharfkantigen Bereiche der zur Befestigung dienenden Winkelbleche von Schraubverbindungen der Gleitschienen oder abgekantete Bereiche der Seitenwände, die u. a. der Versteifung der Führungsrinnen dienen. Darüber hinaus ist eine schnelle Fahrbewegung des mittels der Energieführungskette versorgten Verbrauchers durch die schnelle Auflage der Energieführungskette auf die Führungsrinne mit einer hohen Geräuschentwicklung verbunden. Hierdurch wird insgesamt das Einsatzgebiet der Führungsrinnen auf vergleichsweise grobschlächtige Konstruktionen im Anlagenbau beschränkt.

Des weiteren ist aus der DE 41 40 910 C1 eine gattungsgemäße Führungsrinne bekannt, bei der die Seitenteile aus dünnen Deckblechen mit dazwischenliegendem Kunststoffkern oder Wellprofil bestehen. Die Seitenteile werden durch Keile an einem Tragprofil befestigt. Hierbei wird aufgrund der elastischen Ausführung der Seitenteile die Klemmwirkung erhöht, so daß die Seitenteile bei deren Befestigung am Tragprofil elastisch deformiert werden. Die Seitenwände weisen somit eine nur geringe Eigensteifigkeit auf. Die seitlich vorstehenden Keile können sich bei äußeren Krafteinwirkungen unbeabsichtigt lösen und bilden zusammen mit,der seitlich vorstehenden Unterkonstruktion eine Vielzahl von Vorsprüngen, die sich störend bemerkbar machen können und eine Ausführung der Führungsrinne mit einer im wesentlichen glatten Außenfläche verhindern.

Aufgabe der vorliegenden Erfindung ist es daher, Führungsrinnen zu schaffen, die ein geringes Gewicht aufweisen, aufgrund ihres optischen Erscheinungsbildes und ihrer Formgebung vielseitig einsetzbar sind, deren Geräuschemission bei einer Fahrbewegung der Energieführungskette vermindert ist und die eine hohe Stabilität aufweisen.

Erfindungsgemäß wird diese Aufgabe dadurch gelöst, daß die Seitenteile formstabile Hohlprofile aufweisen und daß zwischen den einander gegenüberliegenden Stirnseiten der Seitenteile Verbindungselemente vorgesehen sind, mittels derer die Seitenteile aneinander und an einer Unterkonstruktion befestigbar sind. Hierdurch können die notwendigen Befestigungselemente zur Verbindung der Seitenteile aneinander und/oder Elemente zur Befestigung weiterer Einrichtungen, wie Gleitschienen o. dgl., auf einfache Weise im Querschnittsbereich der Hohlprofile angeordnet werden, so daß nach außen weisende Vorsprünge vollständig vermieden werden. Des weiteren ist hierdurch die Schaffung im wesentlichen glatter Außen- und Innenflächen der Führungsrinne und damit ein gefälliges optisches Erscheinungsbild sowie die Vermeidung von störenden Vorsprüngen möglich. Insgesamt läßt sich so der Einsatzbereich von Führungsrinnen erweitern. Die Hohlprofile erstrecken sich dabei vorteilhafterweise, aber nicht zwingend notwendig, über die gesamte Länge der Seitenteile, wobei die Führungsrinnen auch ein U-förmiges Profil aufweisen oder einteilig ausgeführt sein können. Durch die Ausgestaltung der Seitenteile als Hohlprofile kann eine deutliche Gewichtsersparnis bei hoher Steifigkeit und nur vergleichsweise geringem Raumbedarf der Seitenteile erzielt werden. Zugleich ist eine deutliche Geräuschverminderung bei einer Fahrbewegung der Energieführungsketten gegeben. Dadurch, daß die Seitenteile mittels der Verbindungselemente sowohl aneinander als auch gleichzeitig an einer Unterkonstruktion befestigbar sind, ist eine deutliche Vereinfachung der Montage gegeben. Die Verbindungselemente können dabei beispielsweise schuhförmig oder als Nut- und Federverbindung ausgeführt sein. Sie können auch an den Stirnseiten der Seitenteile einstückig angeformt oder mittels kraft- und/oder formschlüssig wirkender Elemente an diesen befestigt sein.

Vorzugsweise weisen die Seitenteile eine sich über die gesamte Länge der Seitenteile gleichmäßig erstreckende Profilierung auf, wodurch die Verbindungselemente stirnseitig an dem auf eine beliebige Länge abgelängten Seitenteil befestigbar sind. Hierdurch ist eine besonders einfache Längenanpassung der Führungsrinne gegeben, wobei zugleich die Seitenteile auch in großer Länge und damit kostengünstig herstellbar sind.

Vorzugsweise weist das Hohlprofil mehrere sich bevorzugt in Längsrichtung der Seitenteile erstreckende Kammern auf, die durch formstabile Streben gebildet werden können, die die innen- und außenliegende Wand der Seitenteile verbinden. Die Streben dienen zugleich der Versteifung. Vorzugsweise verlaufen die Streben im wesentlichen horizontal. Die Kammern können auch in einer Richtung, beispielsweise nach oben oder zu den Stirnseiten der Seitenteile hin, geöffnet sein oder auch seitliche Durchbrüche aufweisen. Vorzugsweise sind die Kammern jedoch im montierten Zustand der Führungsrinne geschlossen ausgeführt. Die Stege können auch senkrecht zur Längsrichtung der Seitenteile angeordnet sein.

In einer bevorzugten Ausführungsform sind die Seitenteile bei der Befestigung durch die Verbindungselemente zueinander ausrichtbar und die Verbindungselemente so ausgelegt, daß die Seitenteile einzeln montierbar und entfernbar sind. Hierdurch ist eine einfache Montage und Demontage der Führungsrinne ermöglicht und die Gefahr eines seitlichen Versatzes im Bereich der aneinanderstoßenden Stirnseiten benachbarter Seitenteile vermieden, der bei schneller Bewegung der Energieführungskette in der Führungsrinne sehr störend sein kann. Die Ausrichtung der Seitenteile kann beispielsweise durch ausreichend lange Nuten oder Vorsprünge an den Seitenteilen erfolgen, die in korrespondierende Vorsprünge oder Nuten der Verbindungselemente eingreifen.

Vorzugsweise weisen die Verbindungselemente Zapfen auf, die paßgenau in an den Stirnseiten der Seitenteile angeordnete Hohlräume einführbar sind. Hiermit ist eine einfache und stabile Befestigung der Verbindungselemente an den Seitenteilen und zugleich eine Ausrichtung derselben zueinander gegeben.

Vorteilhafterweise sind die Verbindungselemente zweiteilig ausgebildet, wobei jedes der Teile im montierten Zustand der Führungsrinne an einem Seitenteil, beispielsweise mittels Zapfen, befestigt ist und diesen gegenüberliegenden mit dem jeweils anderen Teil seitlich überlappende Bereiche aufweist, die mittels Befestigungselementen aneinander befestigbar sind. Hiermit ist nach Lösen der Befestigungselemente eine Demontage der Seitenteile aus der Führungsrinne durch Verschiebung der Seitenteile in einer Richtung quer zur Führungsrinne ermöglicht, so daß die Seitenteile montiert bzw. demontiert werden können, ohne die Führungsrinne in ihrer Gesamtlänge zu demontieren. Dies ist insbesondere bei Führungsrinnen mit großer Länge von Vorteil. Darüber hinaus erfolgt durch die einander überlappenden Bereiche der Verbindungselemente eine Ausrichtung der Seitenteile zueinander, die die Montage der Seitenteile wesentlich vereinfacht.

Die Seitenteile der Führungsrinne können ein L-förmiges Profil aufweisen, wobei der kurze Schenkel zum Inneren der Rinne gerichtet ist und eine Auflage für das Untertrum der Energieführungskette bildet. Des weiteren kann das Profil der Seitenteile an derem oberen Ende einen vom Inneren der Rinne zurückspringenden Bereich aufweisen, so daß der Querschnitt der Rinne sich nach oben hin erweitert und ein Einfädeln der Energieführungskette zur Positionierung derselben in der Rinne erleichtert wird.

Vorteilhafterweise sind Endkappen an den Stirnseiten der Seitenteile vorgesehen, so daß die Hohlkammern der Seitenteile nach außen hin abgeschlossen sind und Schmutzablagerungen in den Hohlprofilen verhindert werden. Durch die Verschließung der Hohlkammern kann eine effektive Geräuschdämmung erzielt werden. Des weiteren können die Endkappen der Befestigung der Seitenteile an einer Tragkonstruktion dienen. Die Endkappen können dabei zur Befestigung an den Seitenteilen mit Zapfen versehen sein, die in an den Stirnseiten der Seitenteile angeordnete Hohlräume paßgenau einführbar sind.

Die überlappenden Bereiche der Verbindungselemente und/oder die Endkappen können im Querschnitt L-förmig ausgebildet sein, wobei die kurzen Schenkel zum Inneren der Rinne gerichtet sind und an den kurzen Schenkeln Befestigungsmittel zur Befestigung der Rinne an einer Tragkonstruktion vorgesehen sind. Damit erfolgt die Befestigung der Seitenteile an der Tragkonstruktion mittels der Verbindungselemente bzw. der Endkappen. Durch die L-förmige Ausführung der Verbindungselemente ist eine einfache Montage der Seitenteile ermöglicht und zugleich die Stabilität der Verbindung erhöht.

Schließen die einander überlappenden Bereiche der Verbindungselemente und/oder die Endkappen mit der Kontur der Außenwände der Seitenteile bündig ab, so weist die Führungsrinne nur einen geringen Raumbedarf auf, und außerhalb der Führungsrinne bewegte Objekte können nicht an nach außen weisenden Vorsprüngen der Führungsrinne angreifen.

Die Verbindungselemente sowie die Endkappen können aus Kunststoff gefertigt sein.

Eine Ausbildung der Seitenteile als Aluminiumstranggußteile ermöglicht eine kostengünstige Herstellung der Hohlprofile bei hoher Stabilität und maximaler Gewichtsersparnis. Die Hohlprofile können aber auch aus Kunststoff, insbesondere glasfaserverstärktem Kunststoff, oder aber aus anderen Materialien gefertigt sein.

In den Hohlräumen der Seitenteile kann schalldämmendes Material angeordnet sein. Insbesondere können die Hohlräume mit Kunststoffen ausgeschäumt sein.

Zur Befestigung von Gleitschienen an der Innenwand der Seitenteile können die Seitenteile an ihren zu der Rinne hin weisenden Wänden Ausnehmungen aufweisen, in denen seitliche Vorsprünge der Gleitschienen, vorzugsweise ohne weitere Befestigungsmittel, befestigbar sind, wodurch eine einfache Handhabung der Gleitschienen ermöglicht ist. Insbesondere kann hierdurch auch die Innenseite der Führungsrinnen eben und frei von Vorsprüngen ausgebildet werden. Die Vorsprünge der Gleitschienen können beispielsweise als Rastnocken oder auch als separate Schraubbolzen ausgeführt sein, wobei die Kontermuttern o. dgl. in den Seitenwänden versenkt angeordnet sein können. Die Befestigung der Gleitschienen kann jedoch auch mittels anderer form- oder kraftschlüssiger Befestigungsmittel erfolgen.

Vorteilhafterweise sind die Ausnehmungen der Seitenwände in Form von Einbuchtungen ausgeführt, so daß Durchgangsöffnungen vermieden werden und eine hohe Geräuschdämmung erzielt wird. Hiedurch ist bei Ausführung der Seitenteile als Hohlprofil eine vollständig geschlossene Ausbildung der Hohlkammern und damit eine hohe Stabilität und Geräuschdämmung der Führungsrinne gewährleistet. Die Einbuchtungen können auch der stirnseitigen Befestigung der Verbindungselemente dienen.

Erstrecken sich die Einbuchtungen über die gesamte Länge der Seitenteile, so ist eine Fertigung der Seitenteile der Führungsrinnen in einem kontinuierlichen Formgebungsverfahren, z. B. im Strangpreßverfahren, möglich. Des weiteren ist die Positionierung der Gleitschienen nicht durch nur lokal vorgesehene Durchgangsöffnungen beschränkt, so daß eine stufenlose Verschiebung der Gleitschienen in der Führungsrinne erfolgen kann und eine einfache Anpassung an unterschiedliche Verhältnisse ermöglicht ist. Gegebenenfalls kann eine Fixierung der Gleitschienen mittels Festellreitern erfolgen.

Die an den Seitenwänden vorgesehenen Ausnehmungen weisen vorteilhafterweise hinterschnittene Bereiche auf, in die die Gleitschienen mit hakenförmigen Vorsprüngen einhängbar sind. Hierdurch ist eine einfache und schnelle Montage und Demontage der Gleitschienen ermöglicht.

Vorteilhafterweise weisen die Seitenteile mehrere zur Befestigung der Gleitschienen auf unterschiedlichem Niveau angeordnete Ausnehmungen auf. Werden Energieketten mit unterschiedlicher Höhe der Kettenglieder eingesetzt, so sind die Gleitschienen stets auf einem der jeweiligen Energiekette angepaßten Niveau innnerhalb der Führungsrinne positionierbar und eine einfache Umrüstung der Führungsrinne bei einem Wechsel der Energiekette möglich. Dabei können in Einbuchtungen einer Niveauhöhe angeordnete Gleitschienen auf anderen Niveauhöhen vorgesehene Einbuchtungen verdecken, so daß eine Ablagerung von Stoffen in den Einbuchtungen vermieden wird.

Im folgenden ist die Erfindung in der Zeichnung beispielhaft veranschaulicht und anhand der Zeichnung näher beschrieben. Es zeigen:
- Fig. 1: eine Führungsrinne in Seitenansicht,
- Fig. 2: Führungsrinne gemäß Fig. 1 entlang dem Schnitt A-A,
- Fig. 3: einen ersten Teil eines Verbindungselementes in Vorderansicht (links), Seitenansicht (Mitte) und Aufsicht (rechts),
- Fig. 4: einen zweiten Teil eines Verbindungselementes in Vorderansicht (links), Seitenansicht (Mitte) und Aufsicht (rechts),
- Fig. 5: eine Endkappe in Vorderansicht (links), Seitenansicht (Mitte) und Aufsicht (rechts).

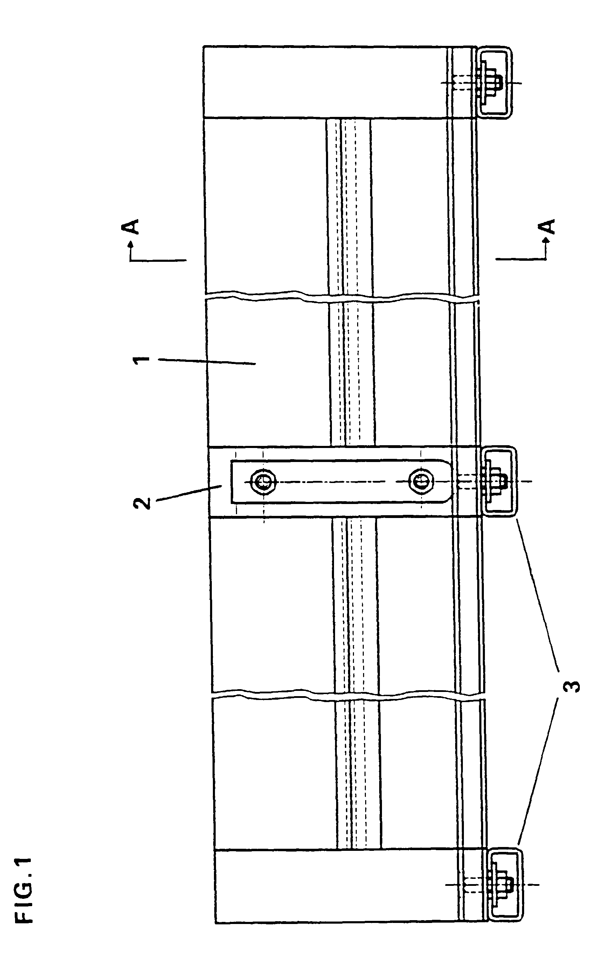

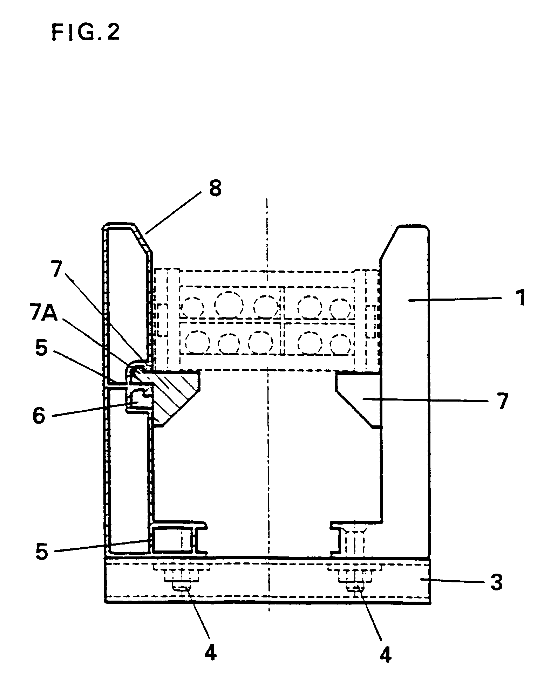

In Fig. 1 und Fig. 2 ist ein Abschnitt einer Führungsrinne für Energieführungsketten gezeigt, die längs zueinander angeordnete Seitenteile 1 aufweist, die mittels Verbindungselementen 2 an einer Unterkonstruktion 3 angeordnet sind. Die Unterkonstruktion besteht aus C-Profilschienen, die quer zur Längsrichtung der Führungsrinne verlaufen und in deren Längsschlitzen an Verbindungselementen 2 angreifende Gewindebolzen 4 längsverschiebbar geführt sind, so daß die Seitenteile 1 stufenlos zueinander beabstandet gehalten werden können.

Die Seitenteile 1 sind als L-förmige Hohlprofile ausgebildet und durch die sich in Längsrichtung der Seitenteile 1 erstrekkenden Streben 5 in mehrere Hohlkammern unterteilt. Der kurze Schenkel der Seitenteile 1 ist in Anlage mit der Unterkonstruktion 3 angeordnet und dient als Auflage für das Untertrum der Energieführungskette. (Das Obertrum der Energieführungskette ist in Fig. 2 gestrichelt angedeutet). Die Innenwände der Seitenteile 1 weisen mit Hinterschneidungen versehene Einbuchtungen 6 auf, in die Gleitschienen 7 zur Auflage für das Obertrum befestigt sind. Dabei sind mehrere Einbuchtungen 6, die sich über die gesamte Länge der Seitenteile 1 erstrekken, voneinander beabstandet angeordnet, so daß die Gleitschienen 7 in unterschiedlichem Abstand zu den kurzen Schenkeln der Seitenteile 1 einhängbar sind. Die Streben 5 sind auf Höhe der Einbuchtungen 6 angeordnet, so daß das Hohlprofil im Bereich seines engsten Querschnitts stabilisiert wird.

Die Seitenteile 1 weisen an ihren oberen Enden von der Führungsrinne zurückspringende Bereiche 8 auf, so daß sich der innere Querschnitt der Führungsrinne nach oben hin erweitert und ein Einfädeln der Energieführungskette zur Positionierung derselben in der Führungsrinne erleichtert wird.

Die Seitenteile 1 der Führungsrinne weisen eine ebene Außenwand auf, die bündig mit der Unterkonstruktion 3 abschließt. Des weiteren schließen die die unterschiedlichen Teile der Verbindungselemente 2 aneinander befestigenden Befestigungselemente bündig mit der Außenwand der Seitenteile 1 ab. Damit liegt eine Führungsrinne vor, die keinerlei nach außen vorstehende Vorsprünge und damit insgesamt einen geringstmöglichen Raumbedarf aufweist. Die durch die Ausbildung der Seitenteile 1 als Hohlprofile bereits erreichte merkliche Geräuschdämmung gegenüber herkömmlichen Führungsschienen wird durch eine Ausschäumung der Hohlprofile mit Kunststoffen wesentlich gesteigert. Des weiteren kann die Führungsrinne selbstverständlich als durchgehendes U-Profil ausgebildet sein oder zwischen den kurzen Schenkeln der Seitenteile 1 Abdeckplatten angeordnet sein, die die Führungsrinne nach unten hin abschließen.

Zur Erreichung einer größtmöglichen Stabilität bei geringem Gewicht und niedrigen Herstellungskosten sind die Seitenteile 1 als Aluminiumstranggußteile ausgebildet.

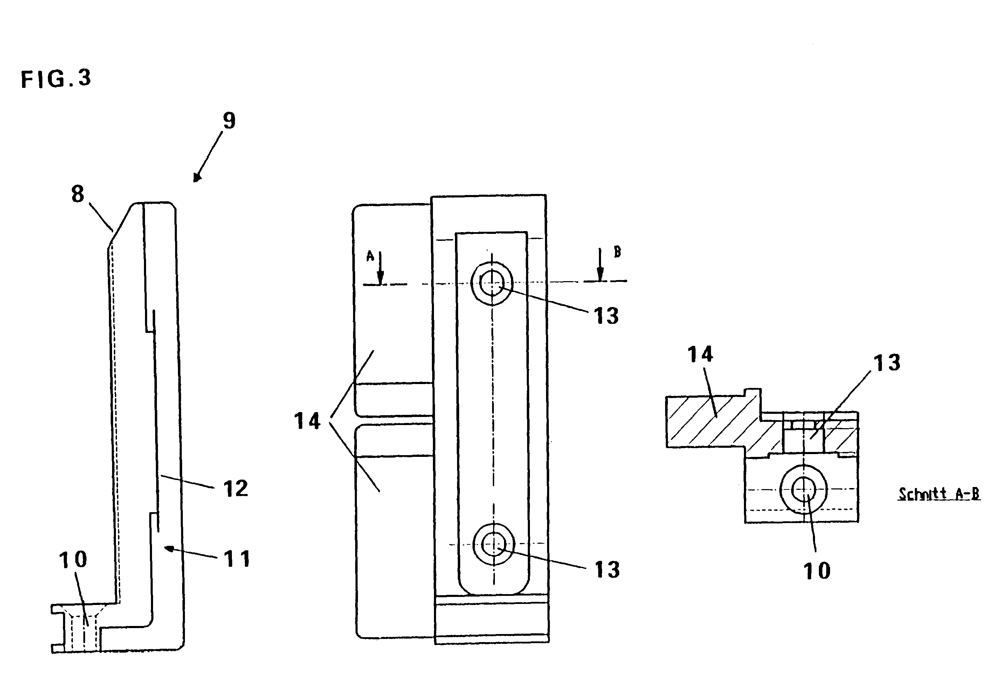

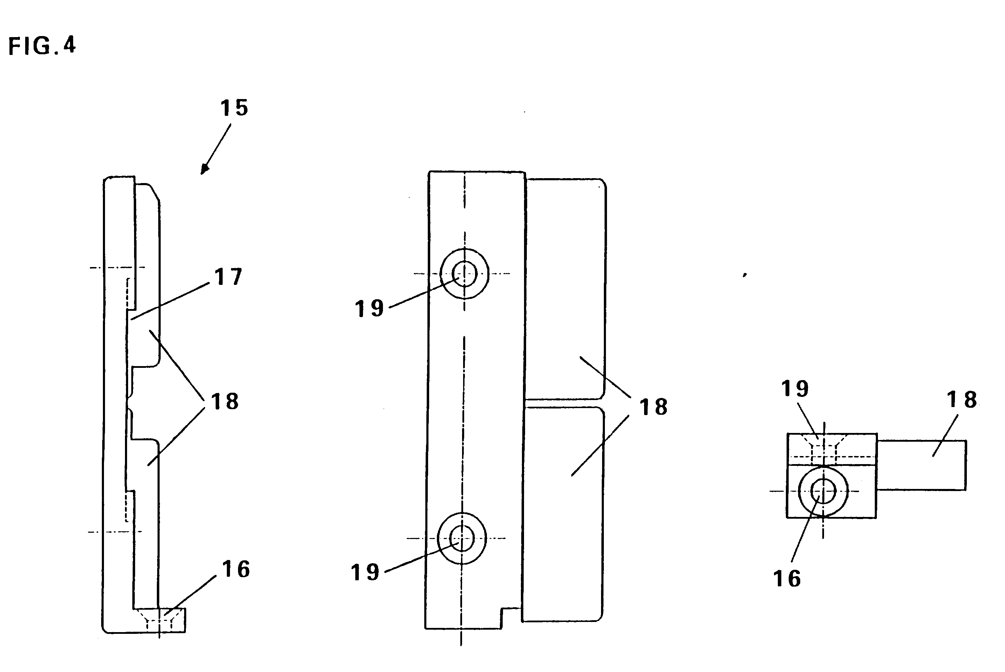

Die die stirnseitig aneinandergrenzenden Seitenteile 1 miteinander verbindenden Verbindungselemente 2 sind, wie in Fig. 3 und Fig. 4 gezeigt, zweiteilig ausgeführt.

Wie aus der in Fig. 3 (links) dargestellten Vorderansicht des ersten Teils 9 des Verbindungselementes 2 hervorgeht, weist dieses im wesentlichen eine L-förmige Gestalt auf. Die Kontur des Teiles 9 in Vorderansicht ist dabei der inneren und äußeren Kontur des Seitenteils 1 angepaßt.

Wie aus der Seitenansicht (Fig. 3, Mitte) und der Aufsicht (Fig. 3, rechts) hervorgeht, ist das erste Teil 9 des Verbindungselementes 2 mit Zapfen 14 versehen, die paßgenau in entsprechende Hohlräume des jeweiligen Seitenteiles 1 einführbar sind, wodurch das Teil 9 des Verbindungselementes 2 an einem Seitenteil 1 befestigbar ist.

Der kurze Schenkel des ersten Teils 9 des Verbindungselementes 2 ist mit einer Durchgangsbohrung 10 versehen, in der eine Schraube oder ein anders geartetes Befestigungselement versenkt aufnehmbar und an der Unterkonstruktion 3 befestigbar ist.

Das erste Teil 9 des Verbindungselementes 2 weist einen von der Außenseite her zurückspringenden, L-förmigen Bereich 11 auf, so daß der L-förmige Korpus des in Fig. 4 dargestellten zweiten Teiles 15 des Verbindungselementes mit dem zurückspringenden Bereich 11 zur Überlappung gebracht werden kann. Der zurückspringende Bereich 11 weist einen nach außen hin vorstehenden Steg 12 auf, der in eine korrespondierende Ausnehmung 17 des zweiten Teils 15 des Verbindungselementes 2 paßgenau einführbar ist. Durch die hier dargestellte Formgebung des überlappenden Bereiches des ersten Teiles 9 des Verbindungselementes mit dem zweiten Teil 15 desselben ist eine stabile Anordnung der Teile des Verbindungselementes zueinander gewährleistet. Wie in der Seitenansicht des ersten Teiles 9 des Verbindungselementes 2, siehe Fig. 3 (Mitte) gezeigt ist, ist das Teil 9 mit zwei Durchgangsbohrungen 13 versehen, die mit entsprechenden Durchgangsbohrungen 19 des zweiten Teiles 15 des Verbindungselementes 2 zur Deckung zu bringen sind, so daß die überlappenden Bereiche des ersten und des zweiten Teils des Verbindungselementes 2 durch Schraubverbindungen oder dergleichen aneinander befestigbar sind. Selbstverständlich ist auch eine Befestigung der Teile 9 und 15 mittels Rastnocken o. dgl. möglich.

Das in Fig. 4 gezeigte zweite Teil 15 des Verbindungselementes 2 weist ebenfalls ein L-förmiges Profil auf und ist mit seinem Korpus an den zurückspringenden Bereich 11 des ersten Teiles 9 des Verbindungselementes 2 anpaßbar, so daß das erste Teil 9 und das zweite Teil 15 des Verbindungselementes 2 (innenseitig und außenseitig) die gleiche Kontur aufweisen. Diese Kontur entspricht zugleich derjenigen der Seitenteile 1. Das zweite Teil 15 des Verbindungselementes 2 weist entsprechend zu dem korrespondierenden ersten Teil 9 an seinem kurzen Schenkel eine Durchgangsbohrung 16 auf, die versenkbar ein mit der Unterkonstruktion 3 zusammenwirkendes Befestigungselement aufnehmen kann, wobei die Durchgangsbohrung 16 quer zur Längsrichtung der Führungsrinne von der Durchgangsbohrung 10 des ersten Teiles 9 beabstandet ist. Des weiteren weist das zweite Teil 15 eine Ausnehmung 17 auf, in die der Steg 12 des ersten Teils 9 paßgenau einführbar ist, sowie an einer der Seitenflächen zwei Zapfen 18, die paßgenau in entsprechende Hohlräume eines Seitenteils 1 zur Befestigung des zweiten Teils 15 einführbar sind.

Unter Lösen der in den Durchgangsbohrungen 10 und 16 angeordneten Befestigungsmittel sind die an dem ersten Teil 9 des Verbindungselementes 2 angeordneten Seitenteile 1 in Richtung auf das Innere der Führungsrinne verschiebbar, so daß die in den Durchgangsbohrungen 16 des zweiten Teiles 15 angeordneten Befestigungsmittel freigelegt werden und anschließend zur Demontage des entsprechenden Seitenteiles 1 entfernt werden können. Selbstverständlich können die Durchgangsbohrungen 10 und 16 der Teile des Verbindungselementes 2 auch in Längsrichtung der Führungsrinne voneinander beabstandet werden, wodurch allerdings eine größere Ausdehnung des Verbindungselementes 2 in Längsrichtung der Führungsrinne bedingt wird.

Die Seitenteile 1 können somit unter Verschiebung quer zur Längsrichtung der Führungsrinne aus dieser entfernt werden, so daß eine Demontage derselben erfolgen kann, ohne daß die Position der zu diesen benachbarten Seitenteile 1 zu verändern ist.

Aufgrund der Anordnung der Mittel zur Befestigung der Seitenteile 1 an der Unterkonstruktion 3 an den dem Inneren der Führungsrinne zugewandten kurzen Schenkel der Verbindungselemente 2 sind über die Außenwand der Seitenteile 1 hervorstehende Befestigungsmittel entbehrlich, wodurch die Unterkonstruktion 3 in ihrer Breite an die der Führungsrinne anpaßbar ist.

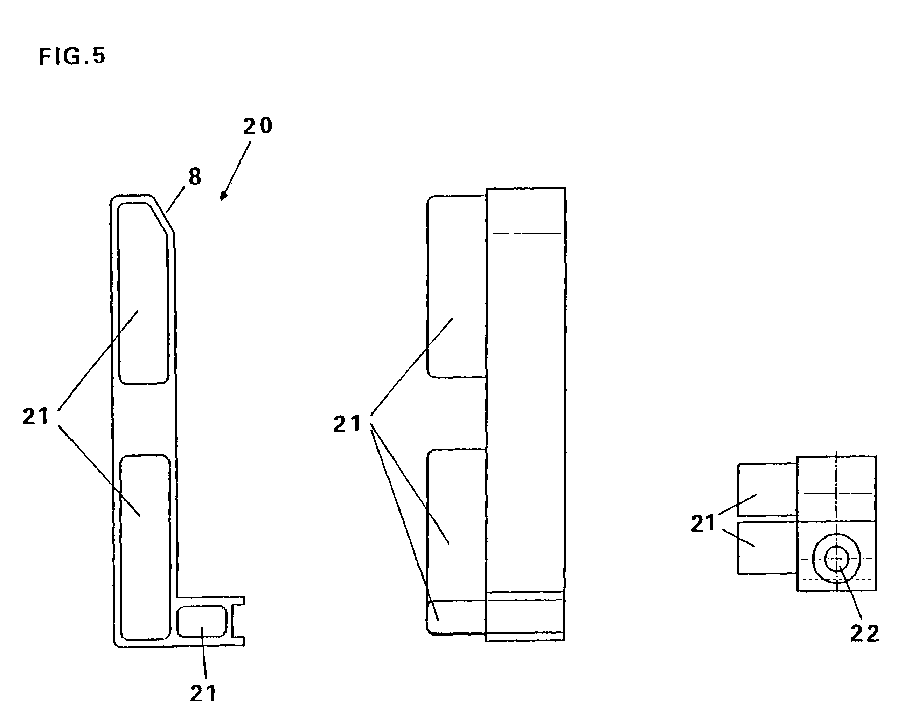

Die in Fig. 5 gezeigten Endkappen 20 sind in ihrer Kontur ebenfalls an die der Seitenteile 1 angepaßt und an einer ihrer Stirnseiten mit drei Zapfen 21 versehen (siehe Fig. 5, links), die in entsprechende Hohlräume der Seitenteile 1 paßgenau einführbar sind. Des weiteren ist der kurze Schenkel der L-förmig ausgebildeten Endkappen 20 mit einer Durchgangsbohrung 22 versehen, in die Befestigungsmittel einführbar und an der Unterkonstruktion 3 befestigbar. Über die Endkappen 20 sind somit die Seitenteile 1 an ihren der Führungsrinne abgewandten Enden befestigbar.

Die Teile der Verbindungselemente 2 sowie die Endkappen 20 sind in dem vorliegenden Ausführungsbeispiel aus Kunststoff gefertigt.

Die Gleitschienen 7 (siehe Fig. 2) weisen einen im wesentlichen trapezförmigen Querschnitt auf, dessen längere Seitenfläche als Anlagebereich an das Seitenteil 1 dient. Am oberen Ende des Anlagebereichs, bündig abschließend mit der Oberkante, ist ein hakenförmiger, sich über die gesamte Länge der Gleitschiene 7 erstreckender Vorsprung 7a über einen kurzen Steg, der in die Einbuchtung 6 eingreift, angeordnet. Durch Einführen des hakenförmigen Vorsprungs 7a ist die Gleitschiene 7 an dem Seitenteil befestigbar und wieder leicht lösbar. Die Höhe des seitlichen Anlagebereiches ist so bemessen, daß, wenn die Gleitschiene 7 oberhalb der untersten Einbuchtung 6 eingehängt ist, die Unterkante des Anlagebereichs an einer Hinterschneidung oder an dem Seitenteil 1 anliegt. Durch die Ausbildung von sich in Längsrichtung der Seitenteile 1 erstrekkenden Einbuchtungen 6 sind die Gleitschienen 7 in den Einbuchtungen 6 längsverschiebbar und damit in diesen an beliebiger Stelle positionierbar und die Seitenteile 1 in einem kontinuierlichen Formgebungsverfahren herstellbar.

### Bezugszeichenliste

- 1: Seitenteil
- 2: Verbindungselement
- 3: Unterkonstruktion
- 4: Gewindebolzen
- 5: Strebe
- 6: Einbuchtung
- 7: Gleitschiene
- 7a: hakenförmiger Vorsprung
- 8: zurückspringender Bereich
- 9: erster Teil des Verbindungselementes
- 10: Durchgangsbohrung
- 11: zurückspringender Bereich
- 12: Steg
- 13: Durchgangsbohrung
- 14: Zapfen
- 15: zweiter Teil des Verbindungselementes
- 16: Durchgangsbohrung
- 17: Ausnehmung
- 18: Zapfen
- 19: Durchgangsbohrung
- 20: Endkappe
- 21: Zapfen
- 22: Durchgangsbohrung

## Patentansprüche

1. Führungsrinne für Energieführungsketten mit langgestreckten, parallelen Seitenteilen, zwischen denen eine Energieführungskette in Längsrichtung ablegbar ist, wobei die Führungsrinne aus mehreren in Längsrichtung der Rinne stirnseitig zueinander angeordneten Seitenteilen zusammengesetzt ist, **dadurch gekennzeichnet,** daß die Seitenteile (1) formstabile Hohlprofile aufweisen und daß zwischen den einander gegenüberliegenden Stirnseiten der Seitenteile (1) Verbindungselemente (2) vorgesehen sind, mittels derer die Seitenteile aneinander und an einer Unterkonstruktion (3) befestigbar sind.

2. Führungsrinne nach Anspruch 1, **dadurch gekennzeichnet,** daß die Seitenteile (1) mittels der Verbindungselemente (2) bei der Befestigung zueinander ausrichtbar sind und die Verbindungselemente so ausgelegt sind, daß die Seitenteile (1) einzeln montierbar und entfernbar sind.

3. Führungsrinne nach Anspruch 1 oder 2, **dadurch gekennzeichnet,** daß die Verbindungselemente ( 2) Zapfen (14, 18) aufweisen, die paßgenau in an den Stirnseiten der Seitenteile (1) vorgesehene Hohlräume einführbar sind.

4. Führungsrinne nach einem der Ansprüche 1 bis 3, **dadurch gekennzeichnet,** daß die Verbindungselemente (2) zweiteilig ausgebildet sind, wobei jedes der Teile (9, 15) an einem Seitenteil befestigbar ist und diesen gegenüberliegend Bereiche aufweist, die mit denen des jeweils anderen Teils in Überlappung bringbar sind.

5. Führungsrinne nach einem der Ansprüche 1 bis 4, **dadurch gekennzeichnet,** daß die Seitenteile (1) ein L-förmiges Profil aufweisen, wobei der kurze Schenkel zum Inneren der Rinne gerichtet ist und eine Auflage für das Untertrum der Energieführungskette bildet.

6. Führungsrinne nach einem der Ansprüche 1 bis 5, **dadurch gekennzeichnet,** daß Endkappen (20) an den Stirnseiten der Seitenteile (1) vorgesehen sind, die an den Stirnseiten der Seitenteile (1) befestigbar sind.

7. Führungsrinne nach einem der Ansprüche 4 bis 6, **dadurch gekennzeichnet,** daß die überlappenden Bereiche der Verbindungselemente und/oder die Endkappen im Querschnitt L-förmig ausgebildet sind, wobei die kurzen Schenkel zum Inneren der Rinne gerichtet sind, und daß an den kurzen Schenkeln Befestigungsmittel zur Befestigung der Rinne an einer Tragkonstruktion vorgesehen sind.

8. Führungsrinne nach einem der Ansprüche 1 bis 7 mit innenangeordneten Gleitschienen (7), **dadurch gekennzeichnet,** daß die Seitenteile (1) an ihren zum Inneren der Rinne hin weisenden Wänden mit Ausnehmungen (Einbuchtungen 6) versehen sind, in denen seitlich vorstehende Teile der Gleitschienen (7) befestigbar sind.

9. Führungsrinne nach Anspruch 8, **dadurch gekennzeichnet,** daß die an den Innenwänden der Seitenteile (1) angeordneten Ausnehmungen (Einbuchtungen 6) hinterschnittene Bereiche aufweisen, in die die Gleitschienen (7) mit hakenförmigen Vorsprüngen (7a) einhängbar sind.

## Claims

1. Guide channel for energy transmission chains with long, parallel side elements, between which an energy transmission chain can be laid in the longitudinal direction, where the guide channel is composed of several side elements arranged with their face ends next to one another in the longitudinal direction of the channel, **characterised in that** side elements (1) display dimen-sionally stable hollow sections and that connecting elements (2) are provided between the opposite face ends of side elements (1), by means of which the side elements can be fastened to each other and to a substructure (3).

2. Guide channel as per Claim 1, **characterised in that** side elements (1) can be aligned in relation to one another by means of connecting elements (2) during fastening and the connecting elements are designed in such a way that the side elements (1) can be fitted and removed singly.

3. Guide channel as per Claim 1 or 2, **characterised in that** the connecting elements (2) display pegs (14, 18) which can be fitted precisely into cavities provided in the face ends of side elements (1).

4. Guide channel as per one of the Claims 1 to 3, **characterised in that** connecting elements (2) are of two-part design, where each of the parts (9, 15) can be fastened to a side element and displays areas at the opposite end which can be made to overlap with those of the other part.

5. Guide channel as per one of the Claims 1 to 4, **characterised in that** side elements (1) have an L-shaped profile, the short leg pointing towards the interior of the channel and forming a support for the lower strand of the energy transmission chain.

6. Guide channel as per one of the Claims 1 to 5, **characterised in that** end caps (20) are provided on the face ends of side elements (1), which can be fastened to the face ends of side elements (1).

7. Guide channel as per one of the Claims 4 to 6,**characterised in that** the overlapping areas of the connecting elements and/or the end caps are designed with an L-shaped cross-section, where the short legs point towards the interior of the channel, and that fastening elements for fastening the channel to a supporting structure are provided on the short legs.

8. Guide channel as per one of the Claims 1 to 7, with sliding rails (7) located on the inside, **characterised in that** side elements (1) are provided with recesses (indentations 6) on their walls facing the interior of the channel, in which laterally projecting parts of sliding rails (7) can be fastened.

9. Guide channel as per Claim 8, **characterised in that** the recesses (indentations 6) located on the inner walls of side elements (1) display undercut areas, into which sliding rails (7) can be hooked by means of hook-shaped projections (7a).

## Revendications

1. Conduit d'alimentation pour chaînes d'alimentation en énergie, comprenant des parties latérales parallèles s'étendant longitudinalement, entre lesquelles une chaîne d'alimentation en énergie peut être agencée dans la direction longitudinale, le conduit d'alimentation étant constitué de plusieurs parties latérales disposées les unes en face des autres dans la direction longitudinale du conduit, caractérisé en ce que les parties latérales (1) comportent des profilés creux indéformables et en ce que, entre les faces frontales des parties latérales (1) en regard les unes des autres, sont prévus des éléments de liaison (2) au moyen desquels les parties latérales sont susceptibles d'être fixées les unes aux autres et sur une substructure (3).

2. Conduit d'alimentation selon la revendication 1, caractérisé en ce que les parties latérales (1) sont susceptibles d'être orientées les unes par rapport aux autres lors de leur fixation au moyen des éléments de liaison (2) et les éléments de liaison sont conçus de telle manière que les parties latérales (1) puissent être montées et démontées individuellement.

3. Conduit d'alimentation selon la revendication 1 ou 2, caractérisé en ce que les éléments de liaison (2) comportent des tenons (14, 18) susceptibles d'être introduits avec une précision d'ajustement dans les espaces creux prévus sur les faces frontales des parties latérales (1).

4. Conduit d'alimentation selon l'une des revendications 1 à 3, caractérisé en ce que les éléments de liaison (2) sont réalisés en deux parties, chacune des parties (9, 15) étant susceptible d'être fixée sur une partie latérale et présentant des zones en regard les unes des autres, les zones d'une partie étant susceptibles de chevaucher respectivement les zones de l'autre partie.

5. Conduit d'alimentation selon l'une des revendications 1 à 4, caractérisé en ce que les parties latérales (1) comportent un profilé en forme de L, la branche courte de celui-ci étant tournée vers l'intérieur du conduit et constituant un support pour le brin inférieur de la chaîne d'alimentation en énergie.

6. Conduit d'alimentation selon l'une des revendications 1 à 5, caractérisé en ce que des capuchons d'extrémité (20) sont prévus sur les faces frontales des parties latérales (1) et sont susceptibles d'être fixés sur les faces frontales des parties latérales (1).

7. Conduit d'alimentation selon l'une des revendications 4 à 6, caractérisé en ce que les zones des éléments de liaison qui se chevauchent et/ou les capuchons d'extrémité ont une forme de L en coupe transversale, les branches courtes du L étant tournées vers l'intérieur du conduit, et en ce que sur les branches courtes sont prévus des moyens de fixation destinés à fixer le conduit sur une structure support.

8. Conduit d'alimentation selon l'une des revendications à 7, muni de glissières intérieures (7), caractérisé en ce que les parties latérales (1) comportent, sur leurs parois tournées vers l'intérieur du conduit, des évidements (échancrures 6) dans lesquels sont susceptibles d'être fixées des parties des glissières (7), faisant saillie latéralement.

9. Conduit d'alimentation selon la revendication 8, caractérisé en ce que les évidements (échancrures 6) ménagés dans les parois intérieures des parties latérales (1) présentent des zones à contre-dépouille, dans lesquelles les glissières (7) sont susceptibles d'être accrochées à l'aide de saillies (7a) en forme de crochet.
